# FASCICULE DE BREVET EUROPEEN

(11) **EP 3 252 859 B1**
(45) Date de publication et mention de la délivrance du brevet: **07.08.2019**
(21) Numéro de dépôt: 17172874.4
(22) Date de dépôt: 24.05.2017
(51) Int. Cl.: H01M 8/04828, H01M 8/249, H01M 8/00, H01M 8/04014, H01M 8/04089, H01M 8/04082, H01M 8/0432, H01M 8/04492, H01M 8/04701, H01M 8/2418, H01M 8/0267, H01M 8/0438, H01M 8/04537, H01M 8/1018

(54) **DISPOSITIF DESTINÉ À GÉNÉRER DE L'ÉLECTRICITÉ À PARTIR D'UNE PILE À COMBUSTIBLE PLANAIRE REFROIDIE PAR FLUX D'AIR**
VORRICHTUNG ZUR ERZEUGUNG VON ELEKTRIZITÄT MITHILFE EINER DURCH LUFTSTROM ABGEKÜHLTEN PLANAREN BRENNSTOFFZELLE
DEVICE FOR GENERATING ELECTRICITY FROM A PLANAR FUEL CELL COOLED BY AN AIR FLOW

(30) Priorité: 30.05.2016 FR 1600876
(43) Date de publication de la demande: 06.12.2017
(73) Titulaire: COMMISSARIAT À L'ÉNERGIE ATOMIQUE ET AUX ÉNERGIES ALTERNATIVES, 75015 Paris (FR)
(72) Inventeur: FAUCHEUX, Vincent, 38250 LANS EN VERCORS (FR); ALINCANT, David, 38290 LA VERPILLIERE (FR); CAPRON, Philippe, 38730 VIRIEU Sur BOURBRE (FR); DAAMI, Anis, 5021 BEMBLA (TN)
(74) Mandataire: GIE Innovation Competence Group

(56) Documents cités:
- WO-A1-2012/117035
- US-A1- 2009 117 445

## Description

### Domaine de l'Invention

L'invention concerne le domaine de la génération d'électricité à partir d'une pile à combustible.

### Etat de la technique

Dans le domaine de la génération d'électricité, il est connu d'utiliser des piles à combustible. Généralement, une pile à combustible génère lors de son fonctionnement, outre de l'électricité, de l'eau et de la chaleur. A des conditions d'environnement (températures, humidités, pressions) d'utilisation données, il est possible de maintenir les performances de la pile à combustible stables dans le temps et ce de manière passive.

Seulement, en fonctionnement réel, la pile à combustible est susceptible d'être utilisée dans une large gamme de températures, d'humidités et de pressions. Dans ce cas, la pile à combustible est généralement associée à un système permettant d'évacuer la chaleur produite par la pile à combustible, de maintenir constante l'hydratation d'une membrane et d'alimenter en oxygène de l'air la cathode de la pile à combustible.

C'est dans cette optique que le document US2004/0197620 propose d'utiliser un même ventilateur qui voit le flux d'air qu'il génère se diviser en deux parties pour, d'une part, refroidir la pile à combustible et, d'autre part, assurer l'alimentation en oxygène de cathodes de la pile à combustible. La solution de ce document s'adresse uniquement aux piles à combustible empilées connues dans le domaine sous le nom de « stack ». Les piles à combustible sous forme d'empilement ne sont pas adaptées pour les besoins en faibles puissances.

Les documents GB2442252 et GB2503240 proposent d'utiliser une recirculation de l'air pour faire fonctionner des piles à combustible de type « stack » sur une large gamme de températures. Ces solutions présentent les mêmes problématiques relatives aux faibles puissances, et il existe donc un besoin de proposer un dispositif plus adapté aux faibles puissances.

La demande de brevet WO2012/117035 décrit une pile à combustible utilisant une membrane combinée à des électrodes reliées en série rendant possible l'empilement de piles à combustible. Cependant, le refroidissement des piles à combustible peut être complexe à mettre en oeuvre. Il existe donc un besoin de proposer un dispositif permettant un contrôle adapté, autrement dit permettant un ajustement, de la température d'une pile à combustible du dispositif.

La demande de brevet US2009/0117445 décrit une pile à combustible planaire. Il existe un besoin d'améliorer une telle pile à combustible planaire, notamment en proposant une solution permettant de contrôler, ou ajuster, de manière satisfaisante sa température.

En outre, il existe un besoin de trouver une solution alternative aux solutions existantes.

### Objet de l'invention

L'invention a pour objet de remédier au moins en partie aux besoins listés ci-dessus.

On tend vers ce but grâce à un dispositif destiné à générer de l'électricité comprenant une pile à combustible planaire comportant : des cellules chacune munie d'une anode et d'une cathode associées à une membrane, et une première face et une deuxième face opposée à ladite première face, ladite première face étant agencée du côté des anodes de ladite pile à combustible et ladite deuxième face étant agencée du côté des cathodes de ladite pile à combustible. Ce dispositif comporte aussi un système configuré pour générer un premier flux d'air destiné à coopérer thermiquement avec la première face, et configuré pour générer un deuxième flux d'air destiné à coopérer avec la deuxième face pour assurer l'alimentation des cathodes de ladite pile à combustible en comburant.

De préférence, ladite membrane est commune à toutes les cellules de ladite pile à combustible.

Selon une mise en oeuvre, la première face de ladite pile à combustible peut être délimitée au moins en partie par une paroi extérieure d'une chambre de distribution de combustible, et la deuxième face de ladite pile à combustible peut être délimitée au moins en partie par une plaque trouée, notamment métallique.

Le dispositif peut comporter un module de pilotage configuré de sorte à agir sur ledit système pour contrôler de manière indépendante les premier et deuxième flux d'air.

Par ailleurs, le module de pilotage peut être configuré pour prendre en entrée au moins l'un des paramètres suivants en vue de déterminer au moins une consigne de pilotage du système : une valeur de température de la pile à combustible, une valeur d'humidité de la pile à combustible, un paramètre physique de résistance électrique mesuré au niveau de la pile à combustible, une valeur de température de l'environnement dans lequel est placé le dispositif, une valeur d'humidité de l'environnement dans lequel est placé le dispositif, une valeur de la charge demandée à la pile à combustible, une valeur de pression atmosphérique de l'environnement dans lequel est placé le dispositif, un indicateur d'une durée de stockage du dispositif, un indicateur du rendement de la pile à combustible, un indicateur de flux d'échange thermique avec l'extérieur.

Selon une mise en oeuvre particulière, ladite pile à combustible forme une première pile à combustible et le dispositif comporte une pile à combustible planaire additionnelle formant une deuxième pile à combustible comportant des cellules chacune munie d'une anode et d'une cathode associées à une membrane de la deuxième pile à combustible, de préférence ladite membrane est commune à toutes les cellules de ladite deuxième pile à combustible. Cette deuxième pile à combustible comporte aussi une première face et une deuxième face opposée à ladite première face, ladite première face étant agencée du côté des anodes de ladite deuxième pile à combustible et ladite deuxième face étant agencée du côté des cathodes de ladite deuxième pile à combustible. Par ailleurs, les première et deuxième piles à combustible sont agencées de telle sorte que la première face de la première pile à combustible est en regard de la première face de la deuxième pile à combustible de sorte à délimiter au moins en partie un canal de circulation du premier flux d'air entre les première et deuxième piles à combustible, ou de sorte que la deuxième face de la deuxième pile à combustible est en regard de la deuxième face de la première pile à combustible de sorte à délimiter au moins en partie un canal de circulation du deuxième flux d'air entre les première et deuxième piles à combustible.

En particulier, le système peut comporter un premier élément de ventilation apte à générer le premier flux d'air et un deuxième élément de ventilation apte à générer le deuxième flux d'air.

Selon une réalisation, le dispositif peut comporter un capteur de température agencé de sorte à mesurer une valeur de température de la pile à combustible, le module de pilotage étant configuré pour prendre en compte au moins une valeur de température mesurée par le capteur de température pour influer sur les caractéristiques du premier flux d'air en pilotant ledit système.

Selon une autre réalisation, qui peut être combinée à celle où le dispositif comporte le capteur de température, le dispositif peut comporter un capteur d'humidité agencé de sorte à mesurer une valeur d'humidité de la pile à combustible, ledit module de pilotage étant configuré pour prendre en compte au moins une valeur d'humidité mesurée par le capteur d'humidité pour influer sur les caractéristiques du deuxième flux d'air en pilotant ledit système.

Selon une réalisation, le dispositif peut comporter un organe configuré pour adapter le rendement de la pile à combustible, ledit organe prenant en entrée une valeur représentative de la température du coeur de la pile à combustible pour élaborer une consigne de rendement à appliquer à la pile à combustible.

L'invention est aussi relative à un objet volant comprenant au moins un dispositif tel que décrit et dans lequel le système configuré pour générer le premier flux d'air et le deuxième flux d'air est tel qu'au moins l'un des premier et deuxième flux d'air est généré au cours du vol dudit objet volant.

L'invention est aussi relative à un procédé d'utilisation d'un dispositif tel que décrit, ledit procédé comprenant une étape de fonctionnement comprenant une étape de génération du premier flux d'air par le système de telle sorte que ledit premier flux d'air généré coopère avec la première face de la pile à combustible et une étape de génération du deuxième flux d'air par le système de telle sorte que ledit deuxième flux d'air généré coopère avec la deuxième face de la pile à combustible.

De préférence, l'étape de fonctionnement peut comporter : une étape de détermination d'au moins une valeur de température de la pile à combustible, une étape de détermination d'au moins une valeur d'humidité de la pile à combustible, une étape d'ajustement du premier flux d'air généré au cours de l'étape de génération du premier flux d'air prenant en compte ladite au moins une valeur de température déterminée, une étape d'ajustement du deuxième flux d'air généré au cours de l'étape de génération du deuxième flux d'air prenant en compte ladite au moins une valeur d'humidité déterminée.

Le procédé peut comporter une étape de démarrage de la pile à combustible telle que ladite pile à combustible présente initialement un rendement dégradé inférieur à un rendement nominal de la pile à combustible, ladite étape de démarrage comportant une étape d'augmentation du rendement de la pile à combustible jusqu'au rendement nominal, notamment de manière progressive ou par paliers. Notamment, au cours de l'étape d'augmentation du rendement, le débit du premier flux d'air augmente.

Le procédé peut aussi comporter comporte une étape de démarrage de la pile à combustible dans laquelle le système est piloté prenant en compte au moins l'un des paramètres suivants déterminé au niveau d'une phase de démarrage de la pile à combustible : une valeur de température de l'environnement dans lequel est utilisé le dispositif, une valeur d'humidité de l'environnement dans lequel est utilisé le dispositif, un indicateur d'une durée de période de stockage du dispositif.

Le procédé peut aussi comporter une étape d'arrêt de la pile à combustible au cours de laquelle le deuxième flux d'air est généré pour assécher le coeur de la pile à combustible.

Le procédé peut aussi comporter une étape de modulation du rendement de la pile à combustible dépendante d'une valeur déterminée représentative de la température du coeur de la pile à combustible.

### Description sommaire des figures

L'invention sera mieux comprise à la lecture de la description qui va suivre, donnée uniquement à titre d'exemple non limitatif et faite en se référant aux dessins sur lesquels :
- La figure 1 illustre schématiquement un dispositif à pile à combustible selon un mode d'exécution de l'invention,
- La figure 2 illustre des étapes de mise en oeuvre d'un procédé d'utilisation du dispositif,
- La figure 3 illustre sur un même graphique l'évolution de la puissance en watts fournie par une pile à combustible en fonction du temps et l'évolution de la tension en volts aux bornes de la pile à combustible (notée PAC sur la figure 3) en fonction du temps,
- La figure 4 illustre un mode de réalisation dans lequel le dispositif comporte deux piles à combustible superposées,
- La figure 5 illustre une variante de la figure 4,
- La figure 6 illustre un objet volant équipé du dispositif selon la figure 1.

Dans ces figures, les mêmes références sont utilisées pour désigner les mêmes éléments.

Par ailleurs, les éléments représentés sur les figures ne sont pas à l'échelle.

### Description de modes particuliers de réalisations

Le dispositif et le procédé décrits ci-après diffèrent de l'art antérieur en ce qu'ils proposent notamment d'utiliser un déplacement d'air au niveau de deux faces opposées d'une pile à combustible. En contrôlant ces déplacements d'air de manière indépendante, il est possible d'avoir un meilleur contrôle de la température de la pile à combustible pour optimiser son fonctionnement dans une large gamme de conditions extérieures. Les conditions extérieures peuvent correspondre à des températures, des pressions ou des humidités variables.

La présente invention s'intéresse tout particulièrement aux piles à combustible planaires. Une pile à combustible planaire correspond en fait à la formation de plusieurs cellules dans un même plan disposées côte à côte contrairement aux « stack » où l'on empile les cellules d'une pile à combustible. La conception planaire est tout particulièrement adaptée pour former des sources d'énergies portables et transportables de faible puissance. Typiquement, dans la présente description on entend par faible puissance une puissance inférieure à 100W. Par ailleurs, la technologie planaire permet aussi de s'affranchir de plaques bipolaires de séparation et de distribution de flux oxydant et de combustible.

Par ailleurs, la présente invention concerne le domaine des piles à combustible dont le flux oxydant (c'est-à-dire le comburant) est de l'air. Par air, on entend dans la présente description un mélange gazeux que l'on retrouve dans l'atmosphère terrestre. Dans ce cas, les cathodes peuvent directement être exposées à l'air libre et à la pression atmosphérique. Dans le langage courant, l'air que l'on retrouve dans l'atmosphère terrestre comporte de l'oxygène qui peut alors servir de comburant pour pile à combustible.

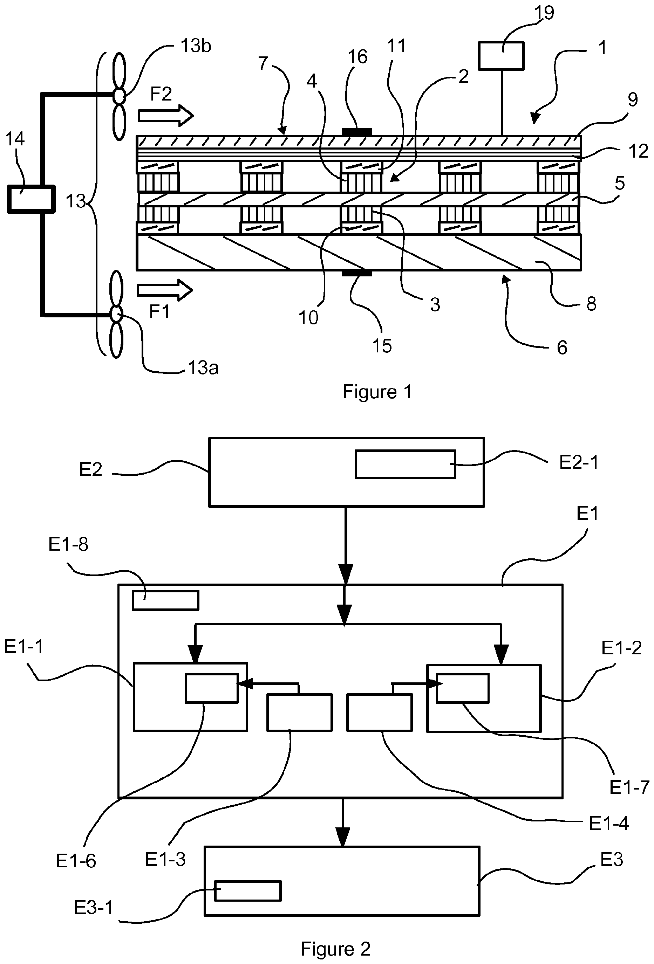

La figure 1 illustre schématiquement un dispositif destiné à générer de l'électricité comprenant une pile à combustible 1 planaire comportant des cellules 2 chacune munie d'une anode 3 et d'une cathode 4 associées à une membrane 5. De préférence, ladite membrane 5 est commune à toutes les cellules 2 de ladite pile à combustible. La membrane 5 est généralement une membrane conductrice ionique, notamment protonique, par exemple de type NAFION®. La membrane est aussi connue dans le domaine sous la dénomination d'électrolyte. Sur la figure 1, la pile à combustible 1 comporte à titre d'illustration cinq cellules 2. La pile à combustible 1 peut générer de l'électricité lorsque du comburant (ici de l'air) est amené à ses cathodes et lorsqu'un combustible (par exemple H₂, c'est-à-dire du dihydrogène) est amené à ses anodes. Cette pile à combustible 1 comporte une première face 6 et une deuxième face 7 opposée à ladite première face 6, ladite première face 6 étant agencée du côté des anodes 3 de ladite pile à combustible 1 et ladite deuxième face 7 étant agencée du côté des cathodes 4 de ladite pile à combustible 1. Par « du côté des anodes 3 », on entend que la première face 6 est plus proche des anodes 3 que des cathodes 4, notamment la première face 6 est incluse dans un plan parallèle au plan incluant les anodes 3 des cellules de la pile à combustible 1. Par « du côté des cathodes 4 », on entend que la deuxième face 7 est plus proche des cathodes 4 que des anodes 3, notamment la deuxième face 7 est incluse dans un plan parallèle au plan incluant les cathodes 4. Généralement, dans une telle pile à combustible 1, les cellules sont reliées entre elles en série.

En particulier, la première face 6 de ladite pile à combustible est délimitée au moins en partie par (voire dans son intégralité par) une paroi extérieure d'une chambre de distribution 8 de combustible configurée pour distribuer du combustible notamment gazeux aux anodes pour le fonctionnement de la pile à combustible, et la deuxième face 7 de ladite pile à combustible 1 est délimitée au moins en partie (voir dans son intégralité) par une plaque trouée 9. Cette plaque 9 peut être en métal (plastique ou papier) de sorte à favoriser les échanges thermiques. Les trous de la plaque 9 sont destinés à laisser passer de l'air en direction des cathodes de sorte à ce que ledit air serve de comburant pour la pile à combustible. La chambre de distribution 8 de combustible peut être classiquement formée par exemple par une plaque comprenant des canaux de distribution (non représentés) du combustible qui peut être H₂.

De manière non limitative, la pile à combustible 1 peut comporter l'empilement des éléments suivants : la chambre de distribution 8 de combustible, des premiers collecteurs de courant 10 notamment en or formés au niveau de chaque anode 3 et interposés entre les anodes 3 et la chambre de distribution 8, les anodes 3 comportant par exemple du carbone et du platine et en contact chacune avec un premier collecteur 10 de courant associé, la membrane 5 commune à toutes les cellules 2 et en contact avec les anodes 3, les cathodes 4 comportant par exemple du carbone et du platine et en contact avec la membrane 5, des deuxièmes collecteurs de courant 11 chacun associé à une cathode 4, une couche de diffusion des gaz 12 en contact avec les collecteurs de courant 11 et permettant la diffusion de l'air en direction des cathodes 4 (cette couche de diffusion des gaz peut être une feuille de cellulose ou encore une membrane « PTFE » pour polytétrafluoroéthylène), et enfin la plaque trouée 9 qui peut être en cuivre ou en aluminium. La plaque trouée 9 et la couche de diffusion des gaz 12 peuvent être formées en une même couche, notamment électriquement isolante. D'autres exemples de piles avec d'autres matériaux pourront être utilisés par l'homme du métier selon les besoins. De préférence, la pile à combustible illustrée présente une hauteur comprise entre 0,5 mm et 5 mm et plus particulièrement de l'ordre de 2 mm, et des dimensions latérales (délimitant notamment les surfaces des première et deuxième faces) comprises entre 5 cm et 100 cm et plus particulièrement de l'ordre de 12cm. L'ensemble formé par les anodes 3, la membrane 5, les cathodes 4, et le cas échéant les premiers et deuxièmes collecteurs de courant 10, 11 est plus communément appelé dans le domaine coeur de la pile à combustible. Typiquement pour une charge appliquée à la pile à combustible le coeur de pile présente une température optimale pour répondre aux besoins de ladite charge. La charge correspond à un organe consommateur, par exemple un moteur, relié à la pile à combustible qui l'alimente électriquement.

Dans la présente description, lorsqu'une dimension est donnée en association avec les des termes « de l'ordre de » on entend exactement la dimension donnée ou la dimension donnée plus ou moins 10%.

Le dispositif comporte en outre un système 13 configuré pour générer un premier flux d'air F1 destiné à coopérer thermiquement avec la première face 6 notamment pour refroidir ladite pile à combustible 1, ledit système 13 étant aussi configuré pour générer un deuxième flux F2 d'air destiné à coopérer avec la deuxième face 7 pour assurer l'alimentation des cathodes 4 de ladite pile à combustible 1 en comburant. Les premier et deuxième flux d'air peuvent être générés par aspiration ou soufflerie. On dit aussi que le premier flux d'air ventile la pile à combustible notamment au niveau de la première face 6, et que le deuxième flux d'air ventile la pile à combustible notamment au niveau de la deuxième face 7. Par « premier flux d'air F1 destiné à coopérer avec la première face 6 pour refroidir ladite pile à combustible 1 », on entend que lorsque le premier flux d'air F1 est généré, notamment par convection forcée, il s'écoule de sorte à agir thermiquement avec la première face 6, autrement dit le premier flux d'air F1 vient en contact avec la première face 6, et il est notamment capable de prélever des calories à la première face 6 d'où il résulte un refroidissement de la pile à combustible 1. Ainsi, le système 13 peut être configuré de sorte à permettre au premier flux d'air F1 de venir en contact avec la première face 6 lorsqu'il est généré. Par « deuxième flux d'air F2 destiné à coopérer avec la deuxième face 7 pour assurer l'alimentation des cathodes 4 de ladite pile à combustible 1 en comburant », on entend que lorsque le deuxième flux d'air F2 est généré, notamment par convection forcée, il s'écoule de sorte à apporter de l'air, notamment l'oxygène de l'air, au niveau de la deuxième face 7 qui est alors en communication fluidique avec les cathodes, autrement dit le deuxième flux d'air F2 vient en contact avec la deuxième face 7. Ainsi, le système 13 peut être tel qu'il oriente les premier et deuxième flux d'air F1, F2 pour que ces derniers atteignent respectivement la première face 6 et la deuxième face 7, cette orientation peut être mise en oeuvre par l'utilisation de canaux ou conduites adaptées. Par « coopérer thermiquement avec ladite première face », on entend que le premier flux d'air F1 peut permettre de refroidir la première face 6 et donc la pile à combustible, ou plus généralement participe à la régulation thermique de la pile à combustible 1. Lorsque la première face 6 est délimitée au moins en partie par une paroi extérieure de la chambre de combustion 8 et lorsque la deuxième face 7 est délimitée au moins en partie par la plaque trouée 9, on comprend que les premier et deuxième flux d'air F1, F2 sont apportés au plus près du coeur de la pile à combustible 1. Il en résulte que lorsque l'on souhaite réguler la température de la pile à combustible 1, les échanges thermiques se feront de manière efficace limitant ainsi la puissance électrique consommée par le système 13.

On comprend alors que l'invention est aussi relative à un procédé d'utilisation du dispositif tel que décrit. Comme illustré en figure 2, le procédé comprend une étape de fonctionnement E1 comprenant une étape de génération E1-1 du premier flux d'air F1 par le système 13 de telle sorte que ledit premier flux d'air généré coopère avec la première face 6 de la pile à combustible 1 et une étape de génération E1-2 du deuxième flux d'air F2 par le système 13 de telle sorte que ledit deuxième flux d'air F2 généré coopère avec la deuxième face 7 de la pile à combustible. Au cours de cette étape de fonctionnement E1, la pile à combustible peut générer de l'électricité. On comprend alors que le procédé peut comporter des étapes d'acheminement des premier et deuxième flux d'air F1, F2 générés respectivement au niveau de la première face 6 et de la deuxième face 7 de la pile à combustible, notamment en utilisant des canaux ou conduites adaptés.

Le système 13 peut être tel qu'il permet la génération des premier et deuxième flux d'air F1, F2 de manière indépendante, c'est-à-dire que les premier et deuxième flux d'air F1, F2 n'ont pas les mêmes caractéristiques par exemple de débit : il est ainsi possible de distinguer une première fonction - mise en oeuvre par le deuxième flux d'air F2 - d'apport de comburant et de maintien de l'hydratation de la membrane 5 pouvant implicitement participer aussi à la régulation en température de la pile à combustible et une deuxième fonction - mise en oeuvre par le premier flux d'air - de régulation exclusive de la température de la pile à combustible notamment pour la refroidir. Cette distinction permet un fonctionnement de la pile à combustible sur de plus larges gammes de températures, d'humidités et de pressions tout en autorisant un fonctionnement nominal. L'objectif de la double ventilation décrite (premier flux d'air et deuxième flux d'air) est de maintenir stable la température du coeur de la pile à combustible pour assurer un niveau de performance satisfaisant de la pile à combustible, notamment quelle que soit la température ambiante ou l'humidité de l'environnement où est utilisé le dispositif. Ainsi, le dispositif peut comporter un module de pilotage 14 configuré de sorte à agir sur le système 13 pour contrôler/ajuster de manière indépendante les premier et deuxième flux d'air F1, F2.

En ce sens, il existe un besoin de savoir comment piloter le système 13 en vue d'obtenir les premier et deuxième flux d'air F1, F2 adéquats. Pour cela, le module de pilotage 14 peut être configuré pour prendre en entrée au moins l'un des paramètres suivants en vue de déterminer au moins une consigne de pilotage du système 13 : une valeur de température de la pile à combustible, une valeur d'humidité de la pile à combustible, un paramètre physique de résistance électrique mesuré au niveau de la pile à combustible, une valeur de température de l'environnement dans lequel est placé le dispositif, une valeur d'humidité de l'environnement dans lequel est placé le dispositif, une valeur de la charge demandée à la pile à combustible 1, une valeur de pression atmosphérique de l'environnement dans lequel est placé le dispositif, un indicateur d'une durée de stockage du dispositif, un indicateur du rendement de la pile à combustible 1, un indicateur de flux d'échange thermique avec l'extérieur (on parle ici de l'échange thermique entre la pile à combustible et l'extérieur). Une consigne de pilotage peut, par exemple, être d'augmenter ou de diminuer le débit du premier flux d'air et/ou du deuxième flux d'air. L'environnement dans lequel est placé le dispositif correspond à l'environnement extérieur au dispositif. Le paramètre physique de résistance électrique mesuré au niveau de la pile à combustible peut être une mesure de résistance de la pile ou d'une cellule de la pile, il peut s'agir d'une résistance interne, d'une résistance de polarisation ou d'une résistance totale qui peut par exemple permettre de déduire la température du coeur de la pile ou l'humidité de la membrane de la pile sans avoir à passer par les capteurs de température ou d'humidité. On comprend alors que le module de pilotage 14 peut utiliser tout ou partie de ces paramètres pour évaluer l'état courant ou futur de la pile à combustible 1 en vue de modifier le premier flux d'air F1 et/ou le deuxième flux d'air F2 afin d'optimiser le fonctionnement de la pile à combustible 1. Par optimiser le fonctionnement de la pile à combustible, on entend, par exemple, s'assurer que le coeur de la pile reste proche d'une température optimale et que la concentration en oxygène apporté au niveau des cathodes soit suffisante. Dans le cadre du procédé, on comprend que ce dernier peut comporter une étape de détermination de tout ou partie de ces paramètres et une étape d'utilisation de ces derniers pour piloter le système 13, par exemple en ajustant le débit du premier flux d'air F1 et/ou le débit deuxième flux d'air F2. Dans la suite de la description, des exemples d'utilisation des paramètres seront donnés. Ces exemples ne sont pas limitatifs et pourront être adaptés par l'homme du métier en fonction des besoins. En particulier, le but du module de pilotage 14 est d'assurer le maintien du coeur de la pile à sa température nominale de fonctionnement, et préférentiellement tout en permettant un apport suffisant d'oxygène à partir de l'air et tout en permettant de maintenir l'hydratation de la membrane à une valeur permettant un bon rendement de fonctionnement de la pile à combustible.

La valeur de température de la pile à combustible peut être mesurée au niveau de cette dernière, notamment de sorte à être représentative ou dépendante de la température du coeur de la pile à combustible 1. La valeur d'humidité de la pile à combustible peut être mesurée au niveau de la pile à combustible 1, notamment de telle sorte à être représentative de l'hydratation de la membrane 5. Dans l'exemple utilisant la valeur de température de la pile à combustible et/ou la valeur d'humidité de la pile à combustible, le dispositif peut comporter (figure 1) un capteur de température 15 agencé de sorte à mesurer la valeur de température de la pile à combustible 1, le module de pilotage 14 est alors configuré pour prendre en compte au moins une valeur de température mesurée par le capteur de température 15 pour influer sur les caractéristiques du premier flux d'air F1 en pilotant ledit système 13, par exemple en assurant le maintien de la température de la pile à combustible, notamment de son coeur, dans une gamme de températures prédéterminée. Le capteur de température 15 peut être fixé au niveau de la première face 6, par exemple sur la paroi extérieure de la chambre de distribution 8, ou alternativement le capteur de température peut aussi être fixé au niveau de la deuxième face 7. Le deuxième flux d'air F2 peut être fixé à une consigne permettant un apport d'air suffisant au niveau des cathodes 4 pour le fonctionnement de la pile à combustible. La pile à combustible 1 générant de l'eau, elle est soumise à un risque de « noyage » des cathodes, pour éviter cela, le deuxième flux d'air F2 participe aussi à l'évaporation de l'eau lorsqu'il circule au niveau de la deuxième face 7. En ce sens, le dispositif peut aussi comporter un capteur d'humidité 16 (figure 1) agencé de sorte à mesurer la valeur d'humidité de la pile à combustible 1, dans ce cas, le module de pilotage 14 est configuré pour prendre en compte au moins une valeur d'humidité mesurée par le capteur d'humidité 16 pour influer sur les caractéristiques du deuxième flux d'air F2 en pilotant ledit système 13. Le capteur d'humidité 16 peut être placé sur l'une des cathodes ou au niveau de la deuxième face 7. Le capteur d'humidité peut être optionnel dans le sens où si le dispositif est utilisé dans une plage restreinte de température/d'humidité de travail, un seul capteur de température peut suffire et dans ce cas le deuxième flux F2 est maintenu constant ou asservi sur le rendement de la pile à combustible 1.

Dans la présente description, par température ambiante, on entend une température comprise entre 20°C et 25°C, et par humidité ambiante on entend une humidité comprise entre 30% et 50% d'humidité relative (RH).

Selon un exemple, l'étape de fonctionnement E1 visée précédemment peut être configurée de telle sorte que :
- Lorsque la pile à combustible fonctionne dans un environnement à une température et une humidité ambiante (ces valeurs de température et d'humidité étant communiquées en tant que paramètres au module de pilotage 14), le premier flux d'air F1 généré, notamment sur consigne du module de pilotage 14, est tel qu'il permet l'évacuation de la chaleur produite par la pile à combustible tout en maintenant celle-ci à une température nominale (température pour laquelle on sait que le rendement est meilleur), et le deuxième flux d'air F2 généré, notamment sur consigne du module de pilotage 14, est tel qu'il permet d'amener l'oxygène de l'air aux cathodes et l'évacuation sous forme de vapeur de l'eau produite par la pile à combustible (pour cela la valeur d'humidité de la pile à combustible peut être utilisée par le module de pilotage pour adapter la consigne correspondante).
- Si la valeur de la température de l'environnement dans lequel est placé le dispositif (notamment communiquée au module de pilotage 14) dépasse la température ambiante ou encore si la température mesurée de la pile à combustible (notamment communiquée au module de pilotage 14) dépasse sa température nominale établie lorsque la pile fonctionne à température ambiante, le débit du premier flux d'air généré, notamment sur consigne du module de pilotage 14, au cours de l'étape E1-1 est augmenté pour maintenir le coeur de la pile à combustible à sa température nominale. Par ailleurs, dans ce cas le débit du deuxième flux d'air généré, notamment sur consigne du module de pilotage 14, au cours de l'étape E1-2 peut être diminué pour maintenir l'hydratation optimale de la membrane. En effet, l'air balayant les cathodes étant plus chaud il aura tendance à plus assécher le coeur de pile à combustible.
- Si la valeur d'humidité de l'environnement dans lequel est placé le dispositif (notamment communiquée au module de pilotage 14) dépasse l'humidité ambiante ou encore si l'humidité mesurée de la pile à combustible (notamment communiquée au module de pilotage 14) dépasse son humidité nominale établie lorsque la pile fonctionne à humidité ambiante, le débit du deuxième flux d'air généré, notamment sur consigne du module de pilotage 14, au cours de l'étape E1-2 est augmenté pour favoriser l'évacuation de l'eau sous forme de vapeur générée du côté des cathodes. Par ailleurs, dans ce cas, le débit du premier flux d'air généré, notamment sur consigne du module de pilotage 14, au cours de l'étape E1-1 est diminué (notamment selon la mesure de température) pour compenser le fait qu'en ventilant plus fort du côté des cathodes (deuxième flux d'air), on dissipe aussi plus de chaleur.
- Si la valeur de la charge demandée à la pile à combustible (notamment communiquée au module de pilotage 14) placée en aval de la pile à combustible (c'est à dire l'organe alimenté électriquement par la pile à combustible) nécessite plus de puissance pour fonctionner à température et humidité ambiantes inchangées de l'environnement dans lequel est placé le dispositif, le courant délivré par la pile à combustible augmente, dans ce cas la température de la pile à combustible va augmenter et la quantité d'eau produite par la pile à combustible va aussi augmenter : les valeurs mesurées de température et d'humidité mesurées de la pile à combustible vont donc augmenter en conséquence. Dans ce cas, il faut augmenter, notamment sur consigne du module de pilotage 14, la ventilation au niveau de la première face 6, c'est à dire augmenter le débit du premier flux d'air F1, et augmenter, notamment sur consigne du module de pilotage 14, la ventilation au niveau de la deuxième face 7, c'est-à-dire augmenter le débit du deuxième flux d'air F2. Ici, il pourra être utilisé un capteur de charge demandée à la pile à combustible pour anticiper et appliquer le protocole sans avoir à attendre de mesurer des augmentations de température et d'humidité.

Il résulte de ce qui a été dit ci-dessus que, de manière plus générique, l'étape de fonctionnement E1 peut comporter une étape de détermination E1-3 d'au moins une valeur de température de la pile à combustible 1, une étape de détermination E1-4 d'au moins une valeur d'humidité de la pile à combustible, une étape d'ajustement E1-6 du premier flux d'air F1 généré au cours de l'étape de génération E1-1 du premier flux d'air F1 prenant en compte ladite au moins une valeur de température déterminée, une étape d'ajustement E1-7 du deuxième flux d'air F2 généré au cours de l'étape de génération E1-2 du deuxième flux d'air F2 prenant en compte ladite au moins une valeur d'humidité déterminée. Selon une réalisation où l'environnement en terme d'humidité est maîtrisé, les étapes E1-4 et E1-7 sont optionnelles, le deuxième flux d'air pouvant rester constant ou asservi sur le rendement de la pile. Avantageusement, l'ajustement du premier flux d'air et l'ajustement du deuxième flux d'air se font en synergie, par exemple l'ajustement du premier flux d'air peut aussi tenir compte du deuxième flux d'air ajusté par exemple pour optimiser la température du coeur de pile en tenant compte de l'impact de l'ajustement du deuxième flux d'air sur la température de la pile à combustible. Alternativement ou en combinaison, le procédé peut aussi comporter une étape de détermination de la charge (par exemple une valeur de courant) demandée à la pile à combustible de telle sorte qu'en fonction de la charge déterminée - par exemple lors de la détection d'une augmentation de charge - les premier et deuxième flux d'air F1, F2 sont ajustés par exemple en augmentant leurs débits en cas de détection d'une augmentation de charge.

En outre, lors de son fonctionnement, le dispositif (et donc la pile à combustible) peut être soumis à des variations environnementales, c'est à dire que l'environnement où est placé le dispositif peut changer. Dans ce cas, les paramètres suivants évoqués précédemment peuvent être suivis et utilisés : la valeur de température de l'environnement dans lequel est placé le dispositif, la valeur d'humidité de l'environnement dans lequel est placé le dispositif, la valeur de pression atmosphérique à laquelle est soumise le dispositif. Ceci est d'autant plus vrai que la pile à combustible planaire est légère et de faible inertie thermique. Par changement de l'environnement, on entend notamment les variations de température de l'environnement, de l'humidité de l'environnement, de l'aéraulique de l'environnement (vent) - dans ce cas, un capteur de flux (non représenté) peut être utilisé pour déterminer l'échange thermique de la pile à combustible avec l'extérieur - et/ou encore de la pression de l'environnement. On comprend alors que l'indicateur de flux d'échange thermique avec l'extérieur peut être utilisé par le module de pilotage 14 pour déterminer les effets de l'environnement quant à la température de la pile à combustible en vue d'en tenir compte dans l'élaboration de la consigne de pilotage du système 13 pour contrôler les premier et deuxième flux d'air. Ces changements de l'environnement peuvent impacter les mesures réalisées au niveau du capteur de température et du capteur d'humidité évoqués précédemment ce qui induira automatiquement un asservissement adapté du système 13 par le module de pilotage 14. Alternativement, le dispositif peut comporter des capteurs additionnels adaptés pour mesurer ces changements de caractéristiques de l'environnement et reliés au module de pilotage 14 pour que ce dernier les prenne en compte dans le cadre de l'asservissement. Autrement dit, au cours de l'étape de fonctionnement E1 évoquée précédemment, la pile à combustible est considérée dans un régime stable qui peut être impacté par les variations environnementales que le module de pilotage 14 peut prendre en compte lorsqu'il connaît les paramètres adéquates pour limiter ces impacts et maximiser le rendement de la pile à combustible. Par exemple, en cas de baisse de la température de l'environnement le module de pilotage 14 pourra diminuer le débit du premier flux d'air F1 pour limiter le refroidissement de la pile à combustible 1, en cas d'augmentation de la température de l'environnement le module de pilotage 14 pourra augmenter le débit du premier flux d'air F1 pour augmenter le refroidissement de la pile à combustible 1, en cas d'augmentation de l'humidité de l'environnement le module de pilotage 14 pourra augmenter le débit du deuxième flux d'air F2 pour éviter de noyer les cathodes, en cas de diminution de l'humidité de l'environnement le module de pilotage 14 pourra diminuer le débit du deuxième flux d'air F2 pour éviter d'assécher la membrane 5. La valeur de pression atmosphérique de l'environnement pourra être utilisée pour déterminer l'altitude en vue de connaître la teneur en oxygène de l'air pour adapter le deuxième flux d'air F2 pour assurer une concentration en oxygène suffisante au niveau des cathodes. En ce sens, le module de pilotage 14 permet aussi d'assurer un maintien de la pile à combustible dans un régime de fonctionnement nominal malgré ces perturbations extérieures.

Selon une mise en oeuvre, l'asservissement du système 13 par le module de pilotage 14 pour contrôler le premier flux d'air et le deuxième flux d'air peut être mis en oeuvre par des boucles de régulation de type PI, PD, PID (avec P pour Proportionnelle, I pour intégrale, et D pour Dérivée), tout ou rien, ou toute autre régulation.

En vue d'assurer une bonne adaptabilité des premier et deuxième flux d'air F1, F2, le système 13 peut comporter un premier élément de ventilation 13a apte à générer le premier flux d'air F1 et un deuxième élément de ventilation 13b apte à générer le deuxième flux d'air F2. Notamment, le premier élément de ventilation 13a est réservé exclusivement à la génération du premier flux d'air F1 et le deuxième élément de ventilation est réservé exclusivement à la génération du deuxième flux d'air F2, on a alors une séparation totalement indépendante de la gestion des premier et deuxième flux d'air F1, F2. Ces deux éléments de ventilation 13a, 13b peuvent donc être pilotés de manière indépendante par le module de pilotage 14, par exemple pour adapter à la demande les débits du premier flux d'air F1 et du deuxième flux d'air F2. Chacun des premier et deuxième éléments de ventilation 13a, 13b peut être composé d'un ou plusieurs ventilateurs axiaux ou radiaux, d'une ou plusieurs turbines, d'un ou plusieurs compresseurs. Les premier et/ou deuxième éléments de ventilation 13a, 13b peuvent être utilisés en extraction ou en soufflerie d'air, en régime continu, en modulation par largeur d'impulsion ou de manière puisée.

Le premier flux d'air F1 notamment destiné au refroidissement de la pile à combustible pouvant atteindre des débits maximums plus importants que ceux du deuxième flux d'air F2, le premier élément de ventilation 13a peut présenter une puissance supérieure à celle du deuxième élément de ventilation 13b. Par puissance supérieure d'un élément de ventilation par rapport à un autre on entend sa capacité à générer un flux d'air avec un débit supérieur.

Le module de pilotage 14 peut être configuré pour piloter l'alimentation des premier et/ou deuxième éléments de ventilation 13a, 13b, en particulier en fonction des paramètres évoqués précédemment. Notamment, les premier et/ou deuxième élément de ventilation 13a, 13b sont configurés pour être alimentés en modulation par largeur d'impulsion (technologie aussi connue sous l'acronyme PWM), ce qui permet une alimentation continue du premier et/ou du deuxième élément de ventilation 13a, 13b ou une alimentation intermittente du premier et/ou deuxième élément de ventilation 13a, 13b. Une telle alimentation est avantageuse dans le sens où elle permet un contrôle fin des premier et deuxième flux d'air F1, F2.

Il a été décrit précédemment une étape de fonctionnement E1. Cette étape est préférentiellement mise en oeuvre lorsque la pile à combustible 1 a atteint un régime stable, notamment en terme de température de son coeur, et que l'on cherche à maintenir cette stabilité au cours du temps. Le dispositif peut aussi avoir à subir un démarrage dans des conditions non optimales, c'est-à-dire que l'environnement dans lequel est placé le dispositif ne permet pas un fonctionnement optimal de la pile à combustible lors de son démarrage, et dans ce cas le module de pilotage 14 peut piloter le système 13 lors du démarrage pour atteindre le plus rapidement ce régime stable.

En ce sens, selon une mise en oeuvre, le procédé peut comporter une étape de démarrage E2 (figure 2) de la pile à combustible 1 dans laquelle le système 13 est piloté (par exemple pour générer le premier flux d'air selon un premier débit et/ou le deuxième flux d'air selon un deuxième débit) en prenant en compte au moins l'un des paramètres suivants déterminé au niveau d'une phase de démarrage de la pile à combustible : la valeur de température de l'environnement dans lequel est démarré/utilisé le dispositif, la valeur d'humidité de l'environnement dans lequel est démarré/utilisé le dispositif, l'indicateur d'une durée de période de stockage du dispositif. Par au niveau de la phase de démarrage de la pile à combustible 1, on entend, par exemple, juste avant sa mise en route ou juste après sa mise en route. La température de l'environnement dans lequel est démarré le dispositif peut être déterminée par mesure de température à partir du capteur de température 15 de la pile à combustible 1 avant la mise en route de la pile à combustible car dans ce cas on considère que la pile à combustible présente une température identique à celle de l'environnement dans lequel elle est placée, alternativement le dispositif peut comporter un capteur de température additionnel situé à distance de la pile à combustible 1. L'humidité de l'environnement dans lequel est utilisé le dispositif peut être déterminée à partir du capteur d'humidité 16 de la pile à combustible 1 si l'on considère qu'avant le démarrage l'humidité qu'il mesure est assimilable à celle de l'environnement, alternativement le dispositif peut comporter un capteur additionnel d'humidité disposé à distance de la pile à combustible. Dans ce cas, il est possible de distinguer différents cas de figures pouvant être mis en oeuvre par le système 13 après acquisition des paramètres adaptés. Dans un premier cas de figure, si les valeurs de température et d'humidité de l'environnement, par exemple déterminées par mesure, dans lequel le dispositif est démarré sont considérées comme des température et humidité ambiantes telles que définies précédemment, pour que la pile à combustible atteigne le plus rapidement possible ses performances nominales, il est préférable que la température du coeur de la pile à combustible soit nominale le plus rapidement possible : dans ce cas, au démarrage, la ventilation, notamment mise en oeuvre par le module de pilotage 14, au niveau de la première face 6 doit être nulle (le premier flux d'air F1 n'est pas généré) ou minimale c'est-à-dire avec le plus petit débit que le premier élément de ventilation (par exemple un ventilateur) est capable de fournir, puis va augmenter jusqu'à un débit de premier flux d'air F1 adapté quand le coeur de la pile à combustible 1 atteint sa température nominale, le deuxième flux d'air F2 présentera quant à lui simplement un débit suffisant pour alimenter en oxygène la pile à combustible 1. Dans un deuxième cas de figure, si la valeur d'humidité de l'environnement, par exemple déterminée par mesure, est considérée comme représentative d'un environnement sec (par exemple inférieure à 30% RH pour Humidité Relative), et que la valeur de température de l'environnement, par exemple déterminée par mesure, est considérée comme élevée (notamment la température de l'environnement est considérée comme élevée lorsqu'elle devient supérieure à 25°C), ou après une période de stockage prolongée de la pile à combustible par exemple supérieure à 1 mois (dans ce cas, l'indicateur de durée de stockage du dispositif peut être comparé à un seuil par le module de pilotage pour déterminer si le stockage était un stockage prolongé ou non), la ventilation, notamment mise en oeuvre par le module de pilotage 14, de la deuxième face 7 (c'est-à-dire le deuxième flux d'air F2) doit être configurée pour maintenir un maximum d'eau dans le coeur de pile, elle est donc minimale c'est-à-dire avec le plus petit débit que le deuxième élément de ventilation (par exemple un ventilateur) est capable de fournir, cette ventilation de la deuxième face 7 peut ensuite augmenter jusqu'à une valeur adaptée quand le coeur de pile atteint sa température nominale. En parallèle de ce deuxième cas de figure, la ventilation, notamment mise en oeuvre par le module de pilotage 14, de la première face 6 (c'est-à-dire le débit du premier flux d'air F1) doit être maximale (le premier élément de ventilation peut alors fonctionner de telle sorte que le débit du premier flux d'air est maximisé) au démarrage puis évoluer jusqu'à sa valeur nominale quand le coeur de pile atteint sa température nominale. Dans un troisième cas de figure, pour un démarrage à plus basse température (typiquement lorsque la température de l'environnement extérieur est inférieure à +20°C) ou en température négative (inférieure à 0°C), il est nécessaire d'augmenter très rapidement la température du coeur de pile. Dans ce dernier cas, la pile à combustible peut même démarrer en rendement dégradé pour optimiser la montée en température du coeur de pile (la tension - ou rendement - de la pile est abaissée) et les ventilations des première et deuxième faces doivent être minimales c'est-à-dire avec le plus petit débit que les premier et deuxième éléments de ventilation (notamment les ventilateurs) sont capables de fournir ou nul dans le cas de la ventilation de la première face. Notons que dans ce cas, des résistances chauffantes (sous forme de film, fils, serpentin ou autre) placées sur les première et/ou deuxième faces 6, 7, et/ou dans la chambre de distribution 8 et/ou dans la plaque 9 et/ou dans la couche de diffusion des gaz 12 peuvent être utilisées et participer à la montée en température de la pile. Par rendement dégradé, on entend par exemple que la pile à combustible est associée à une tension nominale qui correspond au rendement nominal de la pile à combustible, en abaissant volontairement cette tension, la pile à combustible est considérée dans un mode « rendement dégradé ». L'indicateur du rendement de la pile à combustible (notamment lorsqu'il correspond à un rendement dégradé), lorsqu'il est communiqué au module de pilotage 14, permet à ce dernier de générer une ou plusieurs consignes correspondantes, par exemple pour minimiser les premier et/ou deuxième flux d'air lorsque l'on est dans ce troisième cas de figure. Dans ce troisième cas de figure, la ventilation de la deuxième face 7 de la pile à combustible 1 peut aussi être régulée en mode pulsé c'est-à-dire en alternant des périodes de flux et des périodes sans flux pour permettre au coeur de la pile à combustible d'augmenter le plus rapidement possible sa température. Enfin, toujours dans ce troisième cas de figure, lorsque le coeur de la pile à combustible atteint sa température nominale, les régimes de ventilation (premier et deuxième flux d'air) et de rendement de la pile à combustible sont ramenés à des valeurs nominales.

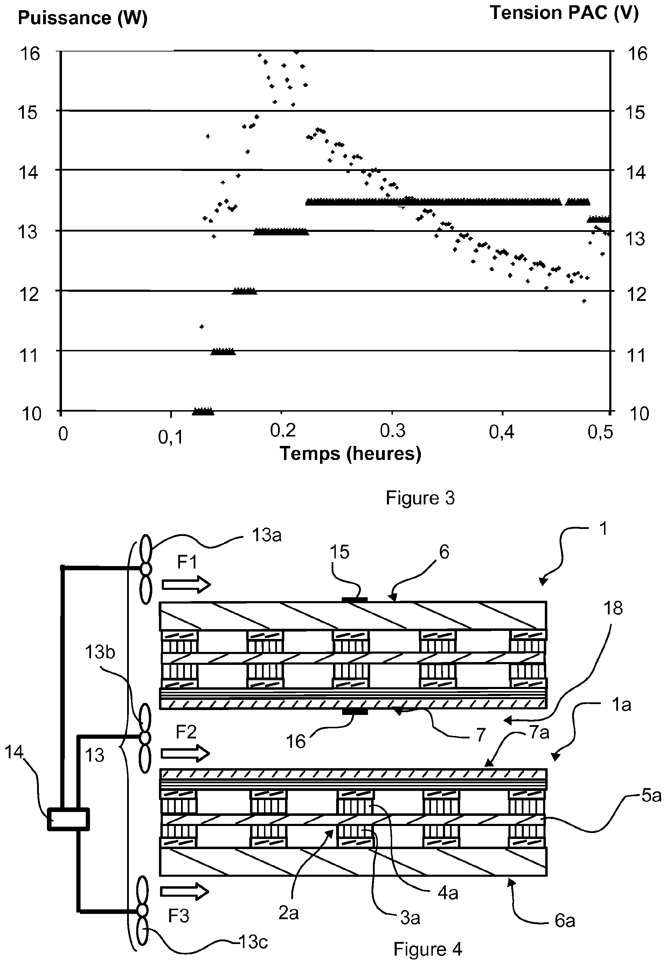

Selon une mise en oeuvre particulière issue de ce qui a été dit précédemment, le procédé peut comporter l'étape de démarrage E2 de la pile à combustible telle que ladite pile à combustible présente initialement un rendement dégradé inférieur au rendement nominal (par exemple, en fournissant une tension dégradée inférieure à la tension de fonctionnement nominale, le rendement sera considéré comme dégradé), et ladite étape de démarrage comporte une étape d'augmentation du rendement de la pile à combustible jusqu'à un rendement nominal de la pile à combustible (par exemple en augmentant la tension dégradée jusqu'à la tension de fonctionnement nominale), notamment l'augmentation se fait de manière progressive ou par paliers. En particulier, au cours de l'étape d'augmentation du rendement, le débit du premier flux d'air F1 augmente notamment de telle sorte que lorsque le coeur de la pile à combustible atteint sa température de fonctionnement nominal, le débit du premier flux d'air F1 corresponde au débit adapté à cette température de fonctionnement nominale en vue de maintenir le coeur de la pile à cette température de fonctionnement nominale. La figure 3 illustre justement un démarrage dans lequel la pile à combustible démarre à un rendement dégradé correspondant à une tension de 10V sachant que la tension nominale de la pile à combustible est de l'ordre de 13V. Cette tension est progressivement augmentée jusqu'à atteindre le régime nominal de l'ordre de 13Volts. Sur la figure 3, les points représentent la puissance générée par la pile à combustible en fonction du temps, et les traits en dents de scie représentent la tension à la sortie de la pile à combustible effectivement mesurée. Ici, la stabilisation de la pile à combustible lors de son démarrage en environnement froid résulte de trois paramètres, la ventilation du côté anodes, la ventilation du côté cathodes, et le rendement (ou la tension de la pile à combustible). Ceci permet de rendre la pile à combustible disponible pour assurer sa fonction de génération d'électricité le plus rapidement possible.

Il a été décrit ci-dessus différentes mises en oeuvre d'une étape de démarrage, consécutivement à cette étape de démarrage, le procédé peut basculer dans l'étape de fonctionnement E1.

Pour certaines applications, il peut être intéressant de ne jamais laisser une goutte d'eau liquide dans le coeur de la pile à combustible après fonctionnement pour éviter, en cas de stockage en température négative, que cette eau liquide ne gel et ne délamine (et détruise) le coeur de la pile à combustible. En ce sens, un protocole d'arrêt de la pile à combustible peut être appliqué. Dans ce cas, le deuxième flux d'air F2 doit être maximal (le deuxième élément de ventilation peut alors fonctionner de telle sorte que le débit du deuxième flux d'air est maximisé) pour évaporer l'eau se situant dans le coeur de la pile à combustible, et le premier flux d'air F1 doit être nul ou minimal (c'est-à-dire avec le plus petit débit que le ventilateur - ou premier élément de ventilation 13a - est capable de fournir) pour maintenir le coeur de pile en température le plus longtemps possible (l'évaporation de l'eau est favorisée par des températures élevées). Cette ventilation peut être poursuivie après l'arrêt de la pile à combustible, c'est-à-dire après l'étape de fonctionnement E1. Autrement dit, le procédé peut comporter une étape d'arrêt E3 (figure 2) de la pile à combustible au cours de laquelle le deuxième flux d'air F2 est généré, par exemple en le maximisant, pour assécher le coeur de la pile à combustible. Par maximisation du deuxième flux d'air F2, on entend que son débit est tel qu'il peut permettre une évaporation optimale de l'eau se trouvant dans le coeur de la pile à combustible. Au cours de cette étape d'arrêt E3, le premier flux d'air F1 est soit nul soit minimisé. Au cours de cette étape d'arrêt E3, les résistances chauffantes évoquées précédemment peuvent être activées ou pas.

Les différents exemples d'asservissement donnés ci-dessus ne sont que des cas généraux indiquant les principales tendances qui pourront être adaptées en fonction des caractéristiques intrinsèques de la pile à combustible et de son packaging.

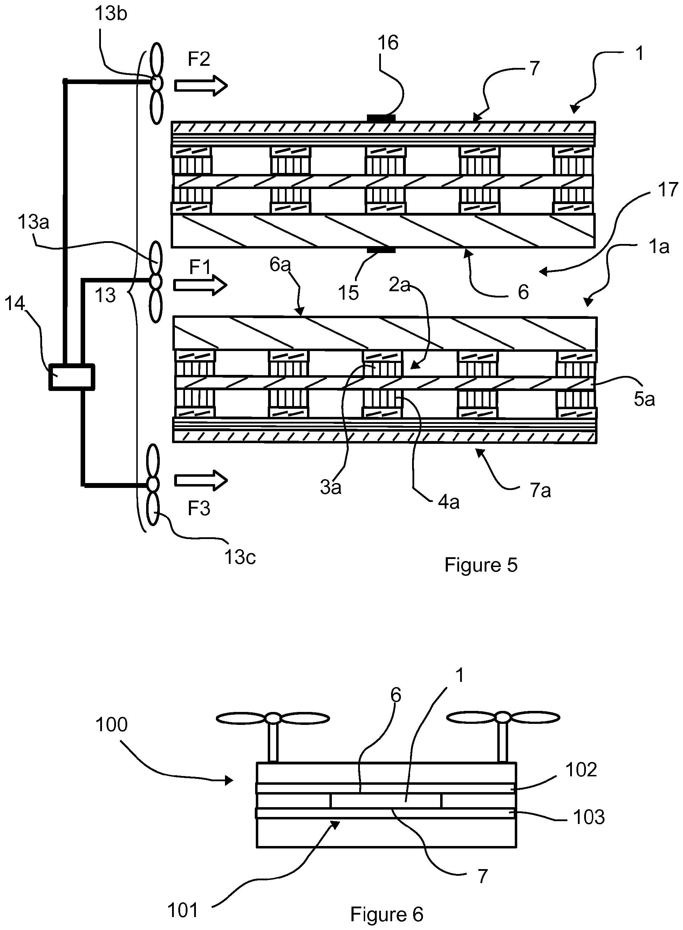

Selon un mode de réalisation particulier illustré en figures 4 et 5, le dispositif peut comporter deux piles à combustible en fonction de la destination d'utilisation de l'électricité générée. Pour cela, ladite pile à combustible 1 forme une première pile à combustible et le dispositif comporte une pile à combustible planaire additionnelle 1a formant une deuxième pile à combustible du type de celle de la figure 1. On comprend que la deuxième pile à combustible 1a peut alors comporter des cellules 2a chacune munie d'une anode 3a et d'une cathode 4a associées à une membrane 5a de la deuxième pile à combustible, de préférence ladite membrane 5a de la deuxième pile à combustible 1a est commune à toutes les cellules 2a de ladite deuxième pile à combustible 1a. Par ailleurs, ladite deuxième pile à combustible 1a peut comporter une première face 6a et une deuxième face 7a opposée à la première face 6a, ladite première face 6a étant agencée du côté des anodes 3a de ladite deuxième pile à combustible 1a et ladite deuxième face 7a étant agencée du côté des cathodes 4a de ladite deuxième pile à combustible 1a. Les première et deuxième piles sont préférentiellement de même type, c'est à dire d'architectures et de paramètres identiques, ainsi, les première et deuxième piles 1, 1a comportent notamment le même nombre de cellules. Ce mode de réalisation particulier permet d'augmenter la densité volumique de puissance et préférentiellement, chaque pile à combustible voit la même quantité de premier flux d'air et de deuxième flux d'air. Selon ce mode de réalisation particulier, il est possible de distinguer deux cas.

Dans un premier cas (figure 5), les première et deuxième piles à combustible 1, 1a sont agencées de telle sorte que la première face 6 de la première pile à combustible 1 est en regard de la première face 6a de la deuxième pile à combustible 1a de sorte à délimiter au moins en partie un canal de circulation 17 du premier flux d'air F1 entre les première et deuxième piles à combustible 1, 1a. Dans le premier cas, le deuxième flux d'air F2 sera généré par le système 13 et orienté de sorte à circuler le long de la première face 7 de la première pile à combustible 1. Par ailleurs, les première et deuxième piles à combustible étant similaires/identiques, un troisième flux d'air F3 sera généré par le système 13 de sorte à présenter les mêmes caractéristiques que le deuxième flux d'air F2 et ce troisième flux d'air F3 sera dirigé vers la deuxième face 7a de la deuxième pile à combustible 1a. Pour cela, il pourra être utilisé un troisième 13c ventilateur agencé par rapport à la deuxième face 7a de la deuxième pile à combustible 1a d'une manière similaire à l'agencement du deuxième ventilateur 13b par rapport à la deuxième face 7 de la première pile à combustible 1, et dans ce cas les deuxième et troisième ventilateurs seront pilotés de la même manière par le module de pilotage 14 : ceci permet d'avoir une homogénéité du comportement de deux piles à combustible 1, 1a identiques placées dans un même environnement. Ce premier cas (figure 5) présente l'avantage d'utiliser un même premier flux d'air F1 en commun de deux piles à combustible adjacentes notamment généré par un même premier ventilateur 13a. Dans un deuxième cas (figure 4), la deuxième face 7a de la deuxième pile à combustible 1a est en regard de la deuxième face 7 de la première pile à combustible 1 de sorte à délimiter au moins en partie un canal de circulation 18 du deuxième flux d'air F2 entre les première et deuxième piles à combustible. Dans ce deuxième cas, le premier flux d'air F1 sera généré par le système 13 et orienté de sorte à circuler le long de la première face 6 de la première pile à combustible 1. Par ailleurs, les première et deuxième piles à combustible 1, 1a étant de type identiques, un troisième flux d'air F3 sera généré par le système 13 de sorte à présenter les mêmes caractéristiques que le premier flux d'air F1 et ce troisième flux d'air F3 sera dirigé vers la première face 6a de la deuxième pile à combustible 1a. Pour cela, il pourra être utilisé un troisième 13c ventilateur agencé par rapport à la première face 6a de la deuxième pile à combustible 1a d'une manière similaire à l'agencement du premier ventilateur 13a par rapport à la première face 6 de la première pile à combustible 1, et dans ce cas les premier et troisième ventilateurs 13a, 13c seront pilotés de la même manière par le module de pilotage 14 alors que le deuxième ventilateur 13b destiné à générer le deuxième flux d'air F2 peut être piloté de manière indépendante par le module de pilotage 14 : ceci permet d'avoir une homogénéité du comportement de deux piles à combustible identiques placées dans un même environnement. Ce deuxième cas présente l'avantage d'utiliser un même deuxième flux d'air F2 en commun de deux piles à combustible planaires adjacentes. Par ailleurs, le fonctionnement des piles étant identique, le capteur de température de la pile et le capteur d'humidité de la pile n'est nécessaire que sur l'une des piles. Bien entendu, le dispositif peut aussi comporter plus de deux piles superposées, dans ce cas les piles à combustible sont telles que pour tout couple de piles superposées, leurs faces en regard délimite un canal de circulation d'un flux d'air correspondant. Dans le présent paragraphe, les premier, deuxième et troisièmes ventilateurs peuvent être généralisés à des premier, deuxième et troisièmes éléments de ventilation.

Selon une mise en oeuvre particulière illustrée en figure 6, l'invention est aussi relative à un objet volant 100 comprenant au moins un dispositif 101 tel que décrit. L'objet volant 100 peut être un drone ou tout type d'objet apte à se déplacer dans l'air en volant. Dans ce cas, le système 13 configuré pour générer le premier flux d'air F1 et le deuxième flux d'air F2 est tel qu'au moins l'un des premier et deuxième flux d'air F1, F2 est généré au cours du vol de l'objet volant notamment par le mouvement de l'objet dans l'air ou par un système de propulsion de l'objet volant. Dans ce cas le dispositif peut être tel que le mouvement de l'objet 100 dans l'air ou son système de propulsion provoque la formation d'un flux d'air qui est guidé au sein de l'objet 100, notamment par des canaux 102, 103, pour atteindre, le cas échéant, la première face 6 et/ou la deuxième face 7 de la pile à combustible 1. En ce sens, le procédé peut être tel que les étapes de génération du premier flux d'air et/ou du deuxième flux d'air résultent d'un déplacement du dispositif dans les airs notamment lorsque ce dernier est porté par l'objet volant tel que décrit. Par ailleurs, dans ce cas le premier élément de ventilation et/ou le deuxième élément de ventilation pourront comporter des volets ou des diaphragmes autorisant plus ou moins, ou non, le passage d'air en direction, le cas échéant, de la première face et ou de la deuxième face de la pile à combustible.

Il est à présent décrit une analyse expérimentale dans laquelle le dispositif comporte deux piles à combustible de dix mono piles - ou cellules - de chacune 3 cm2 placées en série dans deux plans parallèles comme décrit sur la figure 4, ainsi que des périphériques de fonctionnement (vannes de purge, détendeur, capteurs, ventilateurs) dont la masse totale est de 300g et le volume total est de 350cc. Ici les deux piles à combustible comportent chacune une chambre de distribution du combustible 8, le coeur de pile (N collecteurs, N électrodes, 1 électrolyte, avec 1≤ N ≤10 avec ici N=10), la couche de diffusion des gaz et une grille métallique pour homogénéiser les flux thermiques. Ces deux piles à combustible ont été testées à -10°C, +5°C ; +25°C et +44°C avec deux ventilateurs placés selon chaque côté anodique et deux ventilateurs centraux coté cathodique - on comprend alors qu'ici chaque côté anodique est associé à deux ventilateurs et que le canal entre deux piles à combustible est associé à deux ventilateurs. Un capteur de température a été placé sur la pile à combustible au niveau de la première face d'une des deux piles à combustible pour permettre de mesurer la température des piles et assurer l'asservissement des ventilateurs générant les premier, deuxième et troisième flux d'air à partir de cette température mesurée. Dans l'analyse, la tension imposée à la pile à combustible était de 13 volts et la consigne de régulation de la pile à combustible était de 45°C de telle sorte que les ventilateurs étaient pilotés de sorte à tout mettre en oeuvre pour maintenir cette température de 45°C au niveau du coeur de la pile à combustible. Il a été observé qu'au cours du temps, la puissance disponible générée par la pile à combustible restait comprise de manière globale entre 13W et 15W et ce dans la gamme de température -10°C à 45°C. Selon ce protocole de test, il a juste été noté qu'à 45°C le coeur de pile avait une température de l'ordre 54°C ce qui induisait une puissance moins bonne mais de l'ordre de 13,5W, c'est à dire encore exploitable pour assurer l'alimentation électrique d'un organe en particulier.

De manière générale, on comprend de la présente description que le dispositif décrit ainsi que le procédé lié permettent d'assurer une phase de démarrage, de fonctionnement et d'arrêt d'une ou plusieurs piles à combustible planaires, et ce dans une large gamme de conditions environnementales pouvant aller de de -40°C à +70°C et préférentiellement de -20°C à +45°C, via l'utilisation d'une double ventilation du côté anodes et du côté cathodes de la pile à combustible, et le cas échéant d'une modulation du rendement de pile (ou de sa tension).

La modulation du rendement de la pile à combustible peut être mise en oeuvre que cela soit au cours de l'étape de démarrage E2 de la pile à combustible, de l'étape de fonctionnement E1 de la pile à combustible, ou de l'étape d'arrêt E3 de la pile à combustible. Par exemple, en régime nominal (c'est à dire au cours de l'étape E1), il est possible de compenser le manque d'évacuation de la chaleur par le premier flux d'air F1 (notamment si les ventilateurs sont sous-dimensionnés) par une plus faible génération de chaleur c'est-à-dire qu'en fonctionnement nominal à 45°C, on peut augmenter le rendement de fonctionnement de la pile pour générer moins de chaleur et soulager la ventilation anode. Autre exemple, à très basse température de l'environnement extérieur (température inférieure à -20°C), même si la ventilation de premier flux d'air F1 est nulle, et la ventilation de deuxième flux d'air F2 est minimale, il se peut que le dispositif échange en régime nominal trop de chaleur avec l'extérieur provoquant un abaissement de la température du coeur de pile à combustible. Dans ce cas, un rendement dégradé (ou abaissement de la tension) peut être appliqué pour favoriser la génération de chaleur et permettre au coeur de pile à combustible de remonter en température (ce rendement dégradé peut être couplé à l'utilisation de résistances chauffantes telles que décrites ci-dessus). Par ailleurs, la pile à combustible alimente généralement une charge (moteur ou autre), or cette charge peut être variable dans le temps, donc la pile à combustible doit adapter en permanence son rendement sur la puissance demandée par la charge. Si la charge demandée est inférieure à la charge nominale alors la pile à combustible doit délivrer moins de puissance, dans ce cas la pile va d'elle-même augmenter son rendement. A l'inverse si un pic de charge est demandé (c'est à dire que la charge demandée est supérieure à la charge nominale) alors la pile va d'elle-même diminuer son rendement. On comprend donc que le module de pilotage 14 peut avoir connaissance de l'indicateur du rendement de la pile à combustible en vue d'adapter/ajuster les premier et/ou deuxième flux d'air. Alternativement ou en combinaison, le module de pilotage 14 peut même ajuster le rendement de la pile à combustible en synergie avec le pilotage des premier et deuxième éléments de ventilation - ou plus généralement avec le contrôle de manière indépendante des premier et deuxième flux d'air - pour maintenir le coeur de la pile à combustible à une température déterminée. Autrement dit, le module de pilotage 14 peut être configuré pour modifier le rendement de la pile à combustible. En outre, le procédé peut comporter une étape de modulation du rendement de la pile à combustible, cette étape pouvant prendre en compte la température de la pile à combustible ou tout autre caractéristique physique - c'est à dire que cette étape prend en compte/est dépendante d'une valeur représentative de la température du coeur de la pile à combustible - et éventuellement les caractéristiques du premier flux d'air et/ou du deuxième flux d'air notamment dans l'optique de stabiliser la température du coeur de la pile à combustible.

On comprend de ce qui a été dit ci-dessus que le procédé peut comporter une étape de modulation du rendement de la pile à combustible 1 dépendante d'une valeur déterminée (notamment par mesure) représentative de la température du coeur de la pile à combustible 1. On comprend qu'en fonction de la valeur déterminée représentative de la température du coeur de la pile à combustible 1 la modulation du rendement de la pile à combustible sera, le cas échéant adaptée. En particulier, cette étape de modulation (E2-1, E1-8, E3-1) du rendement peut être mise en oeuvre au cours de l'étape de démarrage E2 et/ou au cours de l'étape de fonctionnement E1 et/ou au cours de l'étape E3. En fait, ici on va chercher à maintenir le coeur de la pile dans une gamme, ou à une température, qui correspond à une ou des températures de fonctionnement optimales. Cette valeur représentative de la température déterminée du coeur de la pile peut être réalisée par calcul par exemple à partir de mesure(s) issue du capteur de température ou de résistances liées à la pile à combustible. Cette étape de modulation du rendement de la pile à combustible peut aussi tenir compte des caractéristiques des premier et deuxième flux d'air. En particulier, l'étape de modulation du rendement de la pile à combustible peut être telle que le rendement est volontairement abaissé (par exemple en diminuant la tension de la pile à combustible) pour induire un échauffement de la pile à combustible et donc de son coeur, ou telle que le rendement est volontairement augmenté pour diminuer la température du coeur de la pile à combustible.

On comprend alors que dans le cadre du dispositif, ce dernier peut aussi comporter un organe 19 (figure 1) configuré pour adapter le rendement de la pile à combustible 1, ledit organe 19 pouvant prendre en entrée une valeur représentative de la température du coeur de la pile à combustible 1 pour élaborer une consigne de rendement à appliquer à la pile à combustible 1.

En résumé, la double ventilation (premier et deuxième flux d'air) est asservie au moins à un ou plusieurs capteurs de mesures de température, de pression et d'humidité, de flux. Notons que ces différents capteurs peuvent être associés (ou remplacés) à des mesures de résistances internes, ou résistance de polarisation, ou résistance totale des piles ou mono piles/cellules en vue d'estimer les valeurs qu'auraient mesurés les capteurs remplacés. En particulier, les mesures des résistances (interne/polarisation/totale) se font directement sur les cellules (aussi appelées monocellules), il n'y a donc pas de capteurs supplémentaires à rajouter. Les mesures issues des différents capteurs pouvant être, le cas échéant, caractéristiques de l'état d'hydratation ou d'assèchement des mono piles, il est possible d'asservir les ventilations côté anodes et côté cathodes en fonction d'un ou plusieurs de ces paramètres.

Le dispositif et le procédé présentent l'avantage de pouvoir utiliser un seul fluide, de l'air, pour refroidir la pile à combustible. En outre, ce fluide est dirigé selon des premier et deuxième flux d'air qui peuvent être générés par deux ventilations indépendantes notamment mises en oeuvre par les premier et deuxième éléments de ventilation décrits ci-dessus. En ce sens, les deux faces de la pile à combustible appelées première et deuxième faces peuvent former des échangeurs thermiques directs de la pile à combustible dans le sens où elles seront en contact direct avec respectivement les premier et deuxième flux d'air.

## Revendications

1. Dispositif destiné à générer de l'électricité comprenant une pile à combustible (1) planaire comportant :
• des cellules (2) chacune munie d'une anode (3) et d'une cathode (4) associées à une membrane (5),
• une première face (6) et une deuxième face (7) opposée à ladite première face (6), ladite première face (6) étant agencée du côté des anodes (3) de ladite pile à combustible (1) et ladite deuxième face (7) étant agencée du côté des cathodes (4) de ladite pile à combustible (1),
**caractérisé en ce qu'**il comporte un système (13) configuré pour générer un premier flux d'air (F1) destiné à coopérer thermiquement avec la première face (6), et configuré pour générer un deuxième flux (F2) d'air destiné à coopérer avec la deuxième face (7) pour assurer l'alimentation des cathodes (4) de ladite pile à combustible en comburant.

2. Dispositif selon la revendication précédente, caractérisé ce que ladite membrane (5) est commune à toutes les cellules (2) de ladite pile à combustible (1).

3. Dispositif selon l'une quelconque des revendications précédentes, **caractérisé en ce que** la première face (6) de ladite pile à combustible (1) est délimitée au moins en partie par une paroi extérieure d'une chambre de distribution (8) de combustible, et **en ce que** la deuxième face (7) de ladite pile à combustible (1) est délimitée au moins en partie par une plaque trouée (9), notamment métallique.

4. Dispositif selon l'une quelconque des revendications précédentes, **caractérisé en ce qu'**il comporte un module de pilotage (14) configuré de sorte à agir sur ledit système (13) pour contrôler de manière indépendante les premier et deuxième flux d'air (F1, F2).

5. Dispositif selon la revendication précédente, **caractérisé en ce que** le module de pilotage (14) est configuré pour prendre en entrée au moins l'un des paramètres suivants en vue de déterminer au moins une consigne de pilotage du système (13) : une valeur de température de la pile à combustible, une valeur d'humidité de la pile à combustible, un paramètre physique de résistance électrique mesuré au niveau de la pile à combustible, une valeur de température de l'environnement dans lequel est placé le dispositif, une valeur d'humidité de l'environnement dans lequel est placé le dispositif, une valeur de la charge demandée à la pile à combustible, une valeur de pression atmosphérique de l'environnement dans lequel est placé le dispositif, un indicateur d'une durée de stockage du dispositif, un indicateur du rendement de la pile à combustible, un indicateur de flux d'échange thermique avec l'extérieur.

6. Dispositif selon l'une quelconque des revendications précédentes, **caractérisé en ce que** ladite pile à combustible (1) forme une première pile à combustible (1) et **en ce que** le dispositif comporte une pile à combustible planaire additionnelle (1a) formant une deuxième pile à combustible (1a) comportant :
• des cellules (2a) chacune munie d'une anode (3a) et d'une cathode (4a) associées à une membrane (5a) de la deuxième pile à combustible (1a), de préférence ladite membrane (5a) est commune à toutes les cellules (2a) de ladite deuxième pile à combustible (1a),
• une première face (6a) et une deuxième face (7a) opposée à ladite première face (6a), ladite première face (6a) étant agencée du côté des anodes (3a) de ladite deuxième pile à combustible (1a) et ladite deuxième face (7a) étant agencée du côté des cathodes (4a) de ladite deuxième pile à combustible (1a),
les première et deuxième piles à combustible (1, 1a) étant agencées de telle sorte que :
• la première face (6) de la première pile à combustible (1) est en regard de la première face (6a) de la deuxième pile à combustible (1a) de sorte à délimiter au moins en partie un canal de circulation (17) du premier flux d'air (F1) entre les première et deuxième piles à combustible (1, 1a), ou
• la deuxième face (7a) de la deuxième pile à combustible (1a) est en regard de la deuxième face (7) de la première pile à combustible (1) de sorte à délimiter au moins en partie un canal de circulation (18) du deuxième flux d'air (F2) entre les première et deuxième piles à combustible (1, 1a).

7. Dispositif selon l'une quelconque des revendications précédentes, **caractérisé en ce que** le système (13) comporte un premier élément de ventilation (13a) apte à générer le premier flux d'air (F1) et un deuxième élément de ventilation (13b) apte à générer le deuxième flux d'air (F2).

8. Dispositif selon la revendication 4 et l'une quelconque des revendications précédentes, **caractérisé en ce qu'**il comporte un capteur de température (15) agencé de sorte à mesurer une valeur de température de la pile à combustible (1), le module de pilotage (14) étant configuré pour prendre en compte au moins une valeur de température mesurée par le capteur de température (15) pour influer sur les caractéristiques du premier flux d'air (F1) en pilotant ledit système (13).

9. Dispositif selon la revendication 4 et l'une quelconque des revendications précédentes, **caractérisé en ce qu'**il comporte un capteur d'humidité (16) agencé de sorte à mesurer une valeur d'humidité de la pile à combustible (1), ledit module de pilotage (14) étant configuré pour prendre en compte au moins une valeur d'humidité mesurée par le capteur d'humidité (16) pour influer sur les caractéristiques du deuxième flux d'air (F2) en pilotant ledit système (13).

10. Dispositif selon l'une quelconque des revendications précédentes, **caractérisé en ce qu'**il comporte un organe (19) configuré pour adapter le rendement de la pile à combustible (1), ledit organe (19) prenant en entrée une valeur représentative de la température du coeur de la pile à combustible (1) pour élaborer une consigne de rendement à appliquer à la pile à combustible (1).

11. Objet volant comprenant au moins un dispositif selon l'une quelconque des revendications 1 à 10, **caractérisé en ce que** le système (13) configuré pour générer le premier flux d'air et le deuxième flux d'air est tel qu'au moins l'un des premier et deuxième flux d'air est généré au cours du vol dudit objet volant.

12. Procédé d'utilisation d'un dispositif selon l'une quelconque des revendications 1 à 10, ledit procédé comprenant une étape de fonctionnement (E1) comprenant une étape de génération (E1-1) du premier flux d'air (F1) par le système (13) de telle sorte que ledit premier flux d'air (F1) généré coopère avec la première face (6) de la pile à combustible (1) et une étape de génération (E1-2) du deuxième flux d'air (F2) par le système (13) de telle sorte que ledit deuxième flux d'air (F2) généré coopère avec la deuxième face (7) de la pile à combustible (1).

13. Procédé selon la revendication précédente **caractérisé en ce que** l'étape de fonctionnement (E1) comporte :
• une étape de détermination (E1-3) d'au moins une valeur de température de la pile à combustible,
• une étape de détermination (E1-4) d'au moins une valeur d'humidité de la pile à combustible (1),
• une étape d'ajustement (E1-6) du premier flux d'air (F1) généré au cours de l'étape de génération (E1-1) du premier flux d'air (F1) prenant en compte ladite au moins une valeur de température déterminée,
• une étape d'ajustement (E1-7) du deuxième flux d'air (F2) généré au cours de l'étape de génération (E1-2) du deuxième flux d'air (F2) prenant en compte ladite au moins une valeur d'humidité déterminée.

14. Procédé selon l'une quelconque des revendications 12 à 13, **caractérisé en ce qu'**il comporte une étape de démarrage (E2) de la pile à combustible telle que ladite pile à combustible présente initialement un rendement dégradé inférieur à un rendement nominal de la pile à combustible, ladite étape de démarrage (E2) comportant une étape d'augmentation du rendement de la pile à combustible jusqu'au rendement nominal, notamment de manière progressive ou par paliers.

15. Procédé selon la revendication précédente, **caractérisé en ce que** au cours de l'étape d'augmentation du rendement, le débit du premier flux d'air augmente.

16. Procédé selon l'une quelconque des revendications 12 à 13, **caractérisé en ce qu'**il comporte une étape de démarrage (E2) de la pile à combustible (1) dans laquelle le système (13) est piloté en prenant en compte au moins l'un des paramètres suivants déterminé au niveau d'une phase de démarrage de la pile à combustible (1) :
- Une valeur de température de l'environnement dans lequel est utilisé le dispositif,
- Une valeur d'humidité de l'environnement dans lequel est utilisé le dispositif,
- Un indicateur d'une durée de période de stockage du dispositif.

17. Procédé selon l'une quelconque des revendications 12 à 16, **caractérisé en ce qu'**il comporte une étape d'arrêt (E3) de la pile à combustible (1) au cours de laquelle le deuxième flux d'air (F2) est généré pour assécher le coeur de la pile à combustible.

18. Procédé selon l'une quelconque des revendications 12 à 17, **caractérisé en ce qu'**il comporte une étape de modulation (E1-8, E2-1, E3-1) du rendement de la pile à combustible (1) dépendante d'une valeur déterminée représentative de la température du coeur de la pile à combustible (1).

## Patentansprüche

1. Vorrichtung zur Erzeugung von Elektrizität mit einer planaren Brennstoffzelle (1), umfassend:
• Zellen (2), von denen jede mit einer Anode (3) und einer Kathode (4) versehen ist, die einer Membran (5) zugeordnet sind,
• eine erste Seite (6) und eine zweite Seite (7), die zur ersten Seite (6) entgegengesetzt ist, wobei die erste Seite (6) auf der Seite der Anoden (3) der Brennstoffzelle (1) angeordnet ist und die zweite Seite (7) auf der Seite der Kathoden (4) der Brennstoffzelle (1) angeordnet ist,
**dadurch gekennzeichnet, dass** sie ein System (13) umfasst, das dazu ausgestaltet ist, einen ersten Luftstrom (F1) zu erzeugen, der dazu bestimmt ist, thermisch mit der ersten Seite (6) zusammenzuwirken, und dazu ausgestaltet ist, einen zweiten Luftstrom (F2) zu erzeugen, der dazu bestimmt ist, mit der zweiten Seite (7) zusammenzuwirken, um die Versorgung der Kathoden (4) der Brennstoffzelle mit Oxidationsmittel zu gewährleisten.

2. Vorrichtung nach dem vorhergehenden Anspruch, **dadurch gekennzeichnet, dass** die Membran (5) allen Zellen (2) der Brennstoffzelle (1) gemein ist.

3. Vorrichtung nach einem der vorhergehenden Ansprüche, **dadurch gekennzeichnet, dass** die erste Seite (6) der Brennstoffzelle (1) zumindest teilweise durch eine Außenwand einer Brennstoffverteilkammer (8) begrenzt wird und dass die zweite Seite (7) der Brennstoffzelle (1) zumindest teilweise durch eine gelochte Platte (9), insbesondere aus Metall, begrenzt wird.

4. Vorrichtung nach einem der vorhergehenden Ansprüche, **dadurch gekennzeichnet, dass** sie ein Steuerungsmodul (14) umfasst, das so ausgestaltet ist, dass es auf das System (13) einwirkt, um den ersten und zweiten Luftstrom (F1, F2) auf unabhängige Weise zu steuern.

5. Vorrichtung nach dem vorhergehenden Anspruch, **dadurch gekennzeichnet, dass** das Steuerungsmodul (14) dazu ausgestaltet ist, als Eingang mindestens einen der folgenden Parameter zu nehmen, um mindestens einen Steuerungssollwert des Systems (13) zu bestimmen: einen Temperaturwert der Brennstoffzelle, einen Feuchtigkeitswert der Brennstoffzelle, einen physikalischen Parameter für den an der Brennstoffzelle gemessenen elektrischen Widerstand, einen Temperaturwert der Umgebung, in der die Vorrichtung angeordnet ist, einen Feuchtigkeitswert der Umgebung, in der die Vorrichtung angeordnet ist, einen Wert der von der Brennstoffzelle angeforderten Last, einen Wert des atmosphärischen Drucks der Umgebung, in der die Vorrichtung angeordnet ist, einen Indikator für eine Speicherdauer der Vorrichtung, einen Indikator für die Leistung der Brennstoffzelle, einen Indikator für den Wärmeaustauschstrom mit dem Außenraum.

6. Vorrichtung nach einem der vorhergehenden Ansprüche, **dadurch gekennzeichnet, dass** die Brennstoffzelle (1) eine erste Brennstoffzelle (1) bildet und dass die Vorrichtung eine zusätzliche planare Brennstoffzelle (1a) umfasst, die eine zweite Brennstoffzelle (1a) bildet, umfassend:
• Zellen (2a), von denen jede mit einer Anode (3a) und einer Kathode (4a) versehen ist, die einer Membran (5a) der zweiten Brennstoffzelle (1a) zugeordnet sind, wobei die Membran (5a) bevorzugt allen Zellen (2a) der zweiten Brennstoffzelle (1a) gemein ist,
• eine erste Seite (6a) und eine zweite Seite (7a), die zur ersten Seite (6a) entgegengesetzt ist, wobei die erste Seite (6a) auf der Seite der Anoden (3a) der zweiten Brennstoffzelle (1a) angeordnet ist und die zweite Seite (7a) auf der Seite der Kathoden (4a) der zweiten Brennstoffzelle (1a) angeordnet ist,
wobei die erste und zweite Brennstoffzelle (1, 1a) derart angeordnet sind, dass:
• die erste Seite (6) der ersten Brennstoffzelle (1) gegenüber der ersten Seite (6a) der zweiten Brennstoffzelle (1a) liegt, so dass zumindest teilweise ein Strömungskanal (17) für den ersten Luftstrom (F1) zwischen der ersten und der zweiten Brennstoffzelle (1, 1a) begrenzt wird, oder
• die zweite Seite (7a) der zweiten Brennstoffzelle (1a) gegenüber der zweiten Seite (7) der ersten Brennstoffzelle (1) liegt, so dass zumindest teilweise ein Strömungskanal (18) für den zweiten Luftstrom (F2) zwischen der ersten und der zweiten Brennstoffzelle (1, 1a) begrenzt wird.

7. Vorrichtung nach einem der vorhergehenden Ansprüche, **dadurch gekennzeichnet, dass** das System (13) ein erstes Belüftungselement (13a), das geeignet ist, den ersten Luftstrom (F1) zu erzeugen, und ein zweites Belüftungselement (13b), das geeignet ist, den zweiten Luftstrom (F2) zu erzeugen, umfasst.

8. Vorrichtung nach Anspruch 4 und einem der vorhergehenden Ansprüche, **dadurch gekennzeichnet, dass** sie einen Temperatursensor (15) umfasst, der so angeordnet ist, dass er einen Temperaturwert der Brennstoffzelle (1) misst, wobei das Steuerungsmodul (14) dazu ausgestaltet ist, mindestens einen vom Temperatursensor (15) gemessenen Temperaturwert zu berücksichtigen, um die Merkmale des ersten Luftstroms (F1) zu beeinflussen, indem es das System (13) steuert.

9. Vorrichtung nach Anspruch 4 und einem der vorhergehenden Ansprüche, **dadurch gekennzeichnet, dass** sie einen Feuchtigkeitssensor (16) umfasst, der so angeordnet ist, dass er einen Feuchtigkeitswert der Brennstoffzelle (1) misst, wobei das Steuerungsmodul (14) dazu ausgestaltet ist, mindestens einen vom Feuchtigkeitssensor (16) gemessenen Feuchtigkeitswert zu berücksichtigen, um die Merkmale des zweiten Luftstroms (F2) zu beeinflussen, indem es das System (13) steuert.

10. Vorrichtung nach einem der vorhergehenden Ansprüche, **dadurch gekennzeichnet, dass** sie ein Organ (19) umfasst, das dazu ausgestaltet ist, die Leistung der Brennstoffzelle (1) anzupassen, wobei das Organ (19) als Eingang einen für die Temperatur des Kerns der Brennstoffzelle (1) repräsentativen Wert nimmt, um einen auf die Brennstoffzelle (1) anzuwendenden Leistungssollwert zu erarbeiten.

11. Flugobjekt mit mindestens einer Vorrichtung nach einem der Ansprüche 1 bis 10, **dadurch gekennzeichnet, dass** das System (13), das dazu ausgestaltet ist, den ersten Luftstrom und den zweiten Luftstrom zu erzeugen, derart ist, dass mindestens einer der ersten und zweiten Luftströme während des Fluges des Flugobjekts erzeugt wird.

12. Verfahren zur Verwendung einer Vorrichtung nach einem der Ansprüche 1 bis 10, wobei das Verfahren einen Betriebsschritt (E1) umfasst, der einen Schritt des Erzeugens (E1-1) des ersten Luftstroms (F1) durch das System (13) derart, dass der erzeugte erste Luftstrom (F1) mit der ersten Seite (6) der Brennstoffzelle (1) zusammenwirkt, und einen Schritt des Erzeugens (E1-2) des zweiten Luftstroms (F2) durch das System (13) derart, dass der erzeugte zweite Luftstrom (F2) mit der zweiten Seite (7) der Brennstoffzelle (1) zusammenwirkt, umfasst.

13. Verfahren nach dem vorhergehenden Anspruch, **dadurch gekennzeichnet, dass** der Betriebsschritt (E1) Folgendes umfasst:
• einen Schritt des Bestimmens (E1-3) mindestens eines Temperaturwerts der Brennstoffzelle,
• einen Schritt des Bestimmens (E1-4) mindestens eines Feuchtigkeitswerts der Brennstoffzelle (1),
• einen Schritt des Anpassens (E1-6) des ersten Luftstroms (F1), der während des Schritts des Erzeugens (E1-1) des ersten Luftstroms (F1) erzeugt wurde, bei dem der mindestens eine bestimmte Temperaturwert berücksichtigt wird,
• einen Schritt des Anpassens (E1-7) des zweiten Luftstroms (F2), der während des Schritts des Erzeugens (E1-2) des zweiten Luftstroms (F2) erzeugt wurde, bei dem der mindestens eine bestimmte Feuchtigkeitswert berücksichtigt wird.

14. Verfahren nach einem der Ansprüche 12 bis 13, **dadurch gekennzeichnet, dass** es einen Schritt des Hochfahrens (E2) der Brennstoffzelle derart umfasst, dass die Brennstoffzelle anfänglich eine herabgesetzte Leistung aufweist, die geringer als eine Nennleistung der Brennstoffzelle ist, wobei der Schritt des Hochfahrens (E2) einen Schritt des Steigerns der Leistung der Brennstoffzelle bis auf die Nennleistung, insbesondere stufenlos oder schrittweise, umfasst.

15. Verfahren nach dem vorhergehenden Anspruch, **dadurch gekennzeichnet, dass** der Volumenstrom des ersten Luftstroms während des Schritts des Steigerns der Leistung zunimmt.

16. Verfahren nach einem der Ansprüche 12 bis 13, **dadurch gekennzeichnet, dass** es einen Schritt des Hochfahrens (E2) der Brennstoffzelle (1) umfasst, bei dem das System (13) unter Berücksichtigung mindestens eines der folgenden Parameter gesteuert wird, die in einer Phase des Hochfahrens der Brennstoffzelle (1) bestimmt werden:
- ein Temperaturwert der Umgebung, in der die Vorrichtung verwendet wird,
- ein Feuchtigkeitswert der Umgebung, in der die Vorrichtung verwendet wird,
- ein Indikator für die Speicherperiodendauer der Vorrichtung.

17. Verfahren nach einem der Ansprüche 12 bis 16, **dadurch gekennzeichnet, dass** es einen Schritt des Abschaltens (E3) der Brennstoffzelle (1) umfasst, während dessen der zweite Luftstrom (F2) erzeugt wird, um den Kern der Brennstoffzelle zu trocknen.

18. Verfahren nach einem der Ansprüche 12 bis 17, **dadurch gekennzeichnet, dass** es einen Schritt des Modulierens (E1-8, E2-1, E3-1) der Leistung der Brennstoffzelle (1) umfasst, der von einem bestimmten für die Temperatur des Kerns der Brennstoffzelle (1) repräsentativen Wert abhängig ist.

## Claims

1. Device intended to generate electricity comprising a planar fuel cell (1) comprising:
• cells (2) each provided with an anode (3) and a cathode (4) associated with a membrane (5),
• a first face (6) and a second face (7) opposite to said first face (6), said first face (6) being arranged on the side with the anodes (3) of said fuel cell (1) and said second face (7) being arranged on the side with the cathodes (4) of said fuel cell (1),
**characterized in that** it comprises a system (13) configured to generate a first air flow (F1) intended to cooperate thermally with the first face (6), and configured to generate a second air flow (F2) intended to cooperate with the second face (7) to ensure the supply of oxidizer to the cathodes (4) of said fuel cell.

2. Device according to the preceding claim, **characterized in that** said membrane (5) is common to all the cells (2) of said fuel cell (1).

3. Device according to any one of the preceding claims, **characterized in that** the first face (6) of said fuel cell (1) is bounded off at least in part by an outer wall of a fuel distribution chamber (8), and **in that** the second face (7) of said fuel cell (1) is bounded off at least in part by a perforated plate (9), notably metallic.

4. Device according to any one of the preceding claims, **characterized in that** it comprises a control module (14) configured to act on said system (13) in order to control the first and second airflow (F1, F2) in independent manner.

5. Device according to the preceding claim, **characterized in that** the control module (14) is configured to receive at its input at least one of the following parameters in order to determine at least one control setpoint for the system (13): a temperature value of the fuel cell, a humidity value of the fuel cell, a physical parameter of electrical resistance measured at the level of the fuel cell, a temperature value of the environment in which the device is placed, a humidity value of the environment in which the device is placed, a value of the load demanded from the fuel cell, an atmospheric pressure value of the environment in which the device is placed, an indicator of a duration of storage of the device, an indicator of the output of the fuel cell, an indicator of the heat flow exchanged with the outside.

6. Device according to any one of the preceding claims, **characterized in that** said fuel cell (1) forms a first fuel cell (1) and **in that** the device comprises an additional planar fuel cell (1 a) forming a second fuel cell (1a) comprising:
• cells (2a) each provided with an anode (3a) and a cathode (4a) associated with a membrane (5a) of the second fuel cell (1a), preferably said membrane (5a) being common to all the cells (2a) of said second fuel cell (1a),
• a first face (6a) and a second face (7a) opposite to said first face (6a), said first face (6a) being arranged on the side with the anodes (3a) of said second fuel cell (1a) and said second face (7a) being arranged on the side with the cathodes (4a) of said second fuel cell (1a),
the first and second fuel cells (1, 1a) being arranged such that:
• the first face (6) of the first fuel cell (1) is facing the first face (6a) of the second fuel cell (1a) so as to bound off at least partly a channel (17) for circulation of the first air flow (F1) between the first and second fuel cells (1, 1a), or
• the second face (7a) of the second fuel cell (1a) is facing the second face (7) of the first fuel cell (1) so as to bound off at least partly a channel (18) for circulation of the second air flow (F2) between the first and second fuel cells (1, 1a).

7. Device according to any one of the preceding claims, **characterized in that** the system (13) comprises a first ventilation element (13a) able to generate the first air flow (F1) and a second ventilation element (13b) able to generate the second air flow (F2).

8. Device according to Claim 4 and any one of the preceding claims, **characterized in that** it comprises a temperature sensor (15) arranged so as to measure a temperature value of the fuel cell (1), the control module (14) being configured to take into account at least one temperature value measured by the temperature sensor (15) to influence the characteristics of the first air flow (F1) when controlling said system (13).

9. Device according to Claim 4 and any one of the preceding claims, **characterized in that** it comprises a humidity sensor (16) arranged so as to measure a humidity value of the fuel cell (1), said control module (14) being configured to take into account at least one humidity value measured by the humidity sensor (16) to influence the characteristics of the second air flow (F2) when controlling said system (13).

10. Device according to any one of the preceding claims, **characterized in that** it comprises an element (19) configured to adapt the output of the fuel cell (1), said element (19) receiving at its input a value representative of the temperature of the core of the fuel cell (1) in order to produce an output setpoint to be applied to the fuel cell (1).

11. Flying object comprising at least one device according to any one of Claims 1 to 10, **characterized in that** the system (13) configured to generate the first air flow and the second air flow is such that at least one of the first and second air flows is generated during the flight of said flying object.

12. Method of utilization of a device according to any one of Claims 1 to 10, said method comprising an operating step (E1) comprising a step (E1-1) of generating the first air flow (F1) by the system (13) such that said first air flow (F1) generated cooperates with the first face (6) of the fuel cell (1) and a step (E1-2) of generating the second air flow (F2) by the system (13) such that said second air flow (F2) generated cooperates with the second face (7) of the fuel cell (1).

13. Method according to the preceding claim, **characterized in that** the operating step (E1) comprises:
• a step (E1-3) of determining at least one temperature value of the fuel cell,
• a step (E1-4) of determining at least one humidity value of the fuel cell (1),
• a step (E1-6) of adjustment of the first air flow (F1) generated during the step (E1-1) of generating the first air flow (F1) taking into account said at least one temperature value determined,
• a step (E1-7) of adjustment of the second air flow (F2) generated during the step (E1-2) of generating the second air flow (F2) taking into account said at least one humidity value determined.

14. Method according to any one of Claims 12 to 13, **characterized in that** it comprises a step (E2) of start-up of the fuel cell such that said fuel cell initially has a degraded output less than a nominal output of the fuel cell, said start-up step (E2) involving a step of increasing the output of the fuel cell up to the nominal output, notably in a progressive or stepwise manner.

15. Method according to the preceding claim, **characterized in that** the flow rate of the first air flow increases during the step of increasing the output.

16. Method according to any one of Claims 12 to 13, **characterized in that** it comprises a step (E2) of start-up of the fuel cell (1) in which the system (13) is controlled by taking into account at least one of the following parameters determined at the level of a start-up phase of the fuel cell (1):
- a temperature value of the environment in which the device is used,
- a humidity value of the environment in which the device is used,
- an indicator of a duration of a storage period of the device.

17. Method according to any one of Claims 12 to 16, **characterized in that** it comprises a step (E3) of shut-down of the fuel cell (1) during which the second air flow (F2) is generated to dry out the core of the fuel cell.

18. Method according to any one of Claims 12 to 17, **characterized in that** it comprises a step (E1-8, E2-1, E3-1) of modulation of the output of the fuel cell (1) dependent on a representative value determined for the temperature of the core of the fuel cell (1).
